# EUROPEAN PATENT SPECIFICATION

(11) **EP 3 068 097 B1**
(45) Date of publication and mention of the grant of the patent: **15.04.2020**
(21) Application number: 16157647.5
(22) Date of filing: 26.02.2016
(51) Int. Cl.: H04L 29/06, G06F 16/9535, H04L 29/08

(54) **METHOD AND DEVICE FOR FILTERING INFORMATION**
VERFAHREN UND VORRICHTUNG ZUM FILTERN VON INFORMATIONEN
PROCÉDÉ ET DISPOSITIF DE FILTRAGE D'INFORMATIONS

(30) Priority: 11.03.2015 CN 201510105528
(43) Date of publication of application: 14.09.2016
(73) Proprietor: Xiaomi Inc., Beijing 100085 (CN)
(72) Inventor: FAN, Jinsong, Beijing 100085 (CN); ZHONG, Yi, Beijing 100085 (CN); DU, Zhongyi, Beijing 100085 (CN)
(74) Representative: Cabinet Beau de Loménie

(56) References cited:
- WO-A1-2010/141008
- CN-A- 103 886 088
- CN-A- 104 021 172

## Description

### TECHNICAL FIELD

The present invention relates to the field of Internet technologies and, more particularly, to a method and a device for filtering information.

### BACKGROUND

When browsing a webpage by using a browser, the user may send a HTTP (HyperText Transfer Protocol) request to a server of a communication carrier (carrier server) via a network provided by the communication carrier, and then the carrier server forwards the HTTP request to a corresponding web server.

After receiving the HTTP request, the web server returns corresponding HTML (HyperText Markup language) code to the client terminal browsing the webpage via the carrier server, then the browser parses and displays the HTML code so as to achieve display of the webpage. However, when sending the HTML code returned by the web server to the browser, the carrier server may insert advertisement code into the HTML code, in this way, the browser may display the advertisement inserted by the carrier while displaying the original webpage, which affects the normal browsing of the user.

Document WO 2010/141008 discloses a method for filtering advertisements that are inserted in a text or multimedia message by an originating network.

Document CN 103 886 088 describes a method and device for intercepting advertisements in a webpage, based on attributes of the webpage.

Document CN 104 021 172 describes a method for filtering advertisement based on preset rules.

### SUMMARY

The embodiments of the present invention provide a method and a device for filtering information as claimed in the appended claims. The technical solutions are as follows.

According to a first aspect of embodiments of the present invention, there is provided a method for filtering information, including:
- acquiring a network identity of a currently accessed network, the network identity being an identity of a communication carrier providing the network;
- detecting whether an information filtering rule corresponding to the network identity is stored; and
- if the information filtering rule is stored, filtering code inserted by the carrier, i.e., carrier-inserted code in webpage code according to the information filtering rule, the webpage code being sent from a webpage server to a client terminal via a carrier server.

In a particular embodiment, the method further includes:
- if the information filtering rule is not stored, detecting whether an action of inserting the carrier-inserted code is performed by the carrier server through accessing a predetermined page of the webpage; and
- if the action of inserting the carrier-inserted code is performed by the carrier server, generating an information filtering rule according to the network identity and the carrier-inserted code.

In a particular embodiment, detecting whether the action of inserting the carrier-inserted code is performed by the carrier server through accessing the predetermined page of the webpage includes:
- accessing the predetermined page of the webpage;
- receiving a first webpage code sent by the carrier server;
- detecting whether the first webpage code is the same as a second webpage code, the second webpage code being original webpage code corresponding to the predetermined page of the webpage; and
- if the first webpage code is different from the second webpage code, determining that the action of inserting the carrier-inserted code is performed by the carrier server.

In a particular embodiment, generating the information filtering rule according to the network identity and the carrier-inserted code includes:
- acquiring difference code between the first and second webpage code;
- determining the difference code as the carrier-inserted code; and
- generating an information filtering rule according to a corresponding relationship between the network identity and the carrier-inserted code.

In a particular embodiment, the method further includes:
- reporting the information filtering rule to a server, the server being configured for aggregating the information filtering rules sent by respective client terminals and generating update information with respect to the information filtering rules of respective communication carriers; and
- receiving the update information which is corresponding to the information filtering rule of the currently accessed network and is sent by the server, and updating the information filtering rule according to the update information.

According to a second aspect of embodiments of the present invention, there is provided a device for filtering information, including:
- an acquisition module configured to acquire a network identity of a currently accessed network, the network identity being an identity of a communication carrier providing the network;
- a first detection module configured to detect whether an information filtering rule corresponding to the network identity is stored; and
- a filtering module configured to, if the information filtering rule is stored, filtering carrier-inserted code in webpage code according to the information filtering rule, the webpage code being sent from a webpage server to a client terminal via a carrier server.

In a particular embodiment, the device further includes:
- a second detection module configured to, if the information filtering rule is not stored, detect whether an action of inserting the carrier-inserted code is performed by the carrier server through accessing a predetermined page of the webpage; and
- a generation module configured to, if the action of inserting the carrier-inserted code is performed by the carrier server, generate the information filtering rule according to the network identity and the carrier-inserted code.

In a particular embodiment, the second detection module includes:
- an accessing submodule configured to access the predetermined page of the webpage;
- a receiving submodule configured to receive a first webpage code sent by the carrier server;
- a detection submodule configured to detect whether the first webpage code is the same as a second webpage code, the second webpage code being original webpage code corresponding to the predetermined page of the webpage; and
- a first determination submodule configured to, if the first webpage code is different from the second webpage code, determine that the action of inserting the carrier-inserted code is performed by the carrier server.

In a particular embodiment, the generation module includes:
- an acquisition submodule configured to acquire difference code between the first and second webpage code;
- a second determination submodule configured to determine the difference code as the carrier-inserted code; and
- a generation submodule configured to generate the information filtering rule according to a corresponding relationship between the network identity and the carrier-inserted code.

In a particular embodiment, the device further includes:
- a report module configured to report the information filtering rule to a server, the server being configured for aggregating the information filtering rules sent by respective client terminals and generating update information with respect to the information filtering rules of respective communication carriers; and
- an update module configured to receive the update information which is corresponding to the information filtering rule of the currently accessed network and is sent by the server, and update the information filtering rule according to the update information.

According to a third aspect of embodiments of the present invention, there is provided a device for filtering information, including:
- a processor; and
- a memory for storing instructions executable by the processor;
wherein the processor is configured to:
- acquire a network identity of a currently accessed network, the network identity being an identity of a communication carrier providing the network;
- detect whether an information filtering rule corresponding to the network identity is stored; and
- if the information filtering rule is stored, filter carrier-inserted code in webpage code according to the information filtering rule, the webpage code being sent from a webpage server to a client terminal via a carrier server.

The present invention also provides a computer program, which when executed on a processor of an electronic device, performs the above method.

The technical solutions provided by the embodiments of the present invention may include the following advantageous effects: through filtering the code inserted by the carrier in the webpage code by using the information filtering rule corresponding to the current network, the problem of displaying the advertisement inserted by the carrier on the webpage and thus affecting the normal browsing of the user is solved, and the effects of filtering the advertisement inserted in the webpage by the carrier and ensuring the display of contents of the webpage are achieved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 represents an implementation environment involved by respective embodiments in the present invention;
Fig. 2 illustrates a method flow chart of a method for filtering information, according to one exemplary embodiment;
Fig. 3A illustrates a method flow chart of a method for filtering information, according to another exemplary embodiment;
Fig. 3B illustrates a method flow chart of detecting a process of inserting code by a carrier involved by the method for filtering information, according to another exemplary embodiment;
Fig. 3C illustrates a method flow chart of a process of generating an information filtering rule involved by the method for filtering information, according to another exemplary embodiment;
Fig. 4 illustrates a structural block diagram of a device for filtering information, according to an exemplary embodiment;
Fig. 5 illustrates a structural block diagram of a device for filtering information, according to another exemplary embodiment; and
Fig. 6 illustrates a block diagram of a device for filtering information, according to an exemplary embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

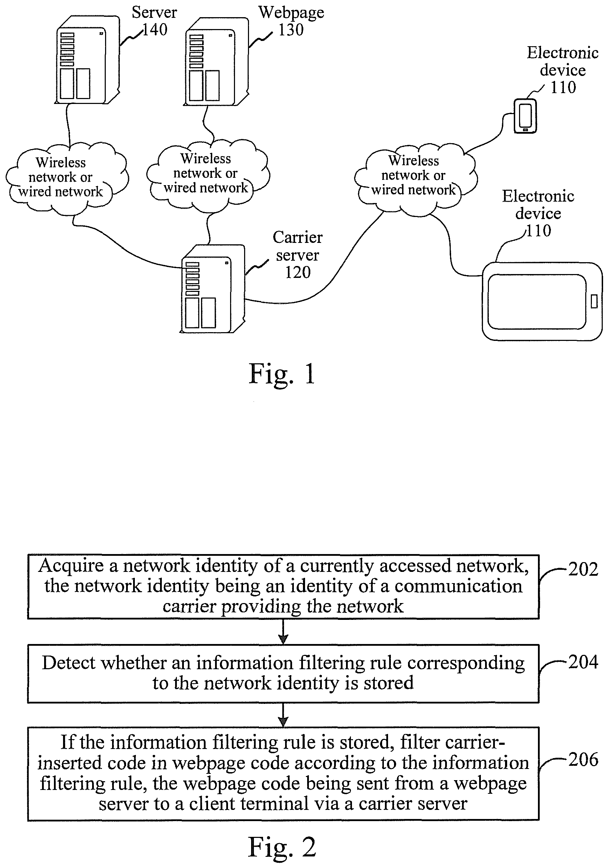

Fig. 1 represents an implementation environment involved by respective embodiments in the present invention. The implementation environment includes an electronic apparatus 110, a carrier server 120, a web server 130 and a server 140.

The electronic apparatus 110 may be implemented by a client terminal installed with a browser. The electronic apparatus may be a smartphone, a tablet, an e-book reader, a portable laptop computer (camera, video camera), and the like.

The electronic apparatus 110 is connected with the carrier server 120 via a wired or wireless network.

The carrier server 120 may be one server, or a server cluster consisting of several servers, or a cloud computing service center. The carrier server 120 is used for forwarding a HTTP request sent by the electronic apparatus 110 to the web server 130, and sending data returned by the web server 130 to the electronic apparatus 110.

The carrier server 120 is connected with the web server 130 via a wired or wireless network.

The web server 130 may be one server, or a server cluster consisting of several servers, or a cloud computing service center. The web server 130 is used for returning corresponding data according to the received HTTP request.

The server 140 is connected with the carrier server 120 via a wired or wireless network.

The server 140 may be one server, or a server cluster consisting of several servers, or a cloud computing service center. The server 140 is used for aggregating information filtering rules sent by respective electronic apparatuses 110, and generating update information for the information filtering rules of respective communication carriers.

In order to simplify the description, hereinafter, only an information filtering method being performed by the client terminal is exemplified, but the present invention is not limited thereto.

Fig. 2 illustrates a method flow chart of a method for filtering information, according to one exemplary embodiment. In the present embodiment, the method for filtering information being used in the electronic apparatus 110 shown in Fig. 1 is explained. The method for filtering information may include the following steps.

In step 202, a network identity of a currently accessed network is acquired, the network identity being an identity of a communication carrier (i.e. operator) providing the network.

In step 204, whether an information filtering rule corresponding to the network identity is stored is detected.

In step 206, if the information filtering rule is stored, code inserted by the carrier (carrier-inserted code) in webpage code is filtered according to the information filtering rule, wherein the webpage code is sent from a webpage server to a client terminal via a carrier server.

In summary, in the method for filtering information provided by the present exemplary embodiment, the code inserted by the carrier in the webpage code is filtered by using the information filtering rule corresponding to the current network, which solves the problem of displaying the advertisement inserted by the carrier on the webpage and thus affecting the normal browsing of the user, and achieves the effects of filtering the advertisement inserted in the webpage by the carrier and ensuring the display of contents of the webpage.

The client terminal detects whether a corresponding information filtering rule is stored according to the acquired network identity, and filters the advertisement inserted by the carrier according to the information filtering rule; when no corresponding information filtering rule is stored, the client terminal detects whether an advertisement is inserted by the carrier, and when detecting that the carrier inserts an advertisement, the client terminal generates a corresponding information filtering rule and filters the advertisement. Hereinafter, one embodiment is adopted for explanation.

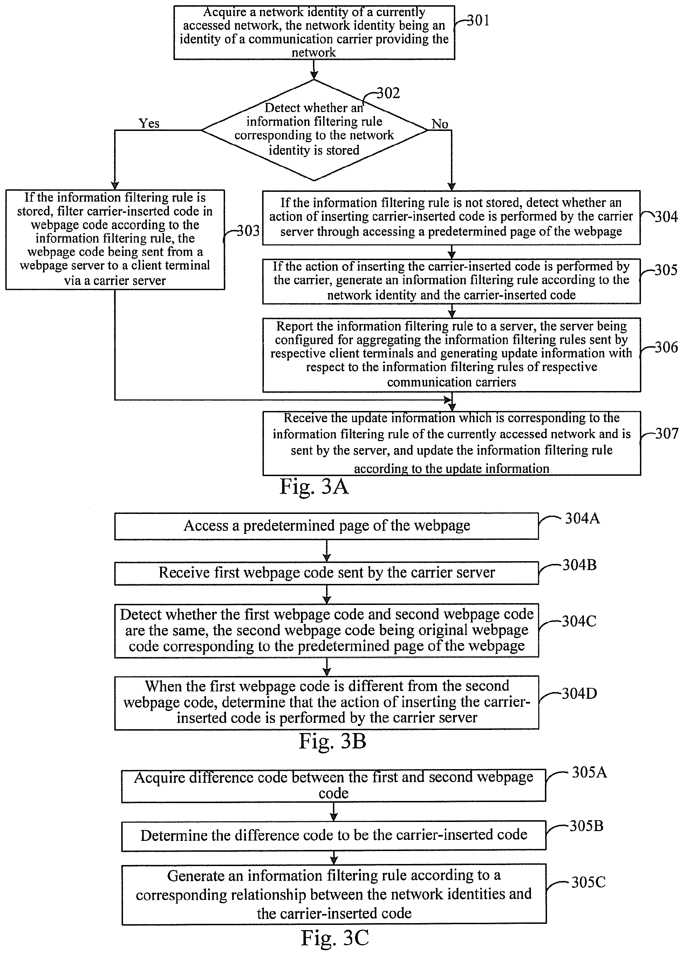

Fig. 3A illustrates a method flow chart of a method for filtering information, according to another exemplary embodiment. In the present embodiment, the method for filtering information being used in the electronic apparatus 110 shown in Fig. 1 is explained. The method for filtering information may include the following steps.

In step 301, a network identity of a currently accessed network is acquired, the network identity being an identity of a communication carrier providing the network.

When the user accesses the network by using the electronic apparatus installed with a browser client terminal, the client terminal may automatically acquire a network identity of the network, wherein the network identity is used for indicating the communication carrier providing the network. In normal conditions, the network identity is an ISP (Internet Service Provider) identity, and the client terminal may know the communication carrier corresponding to the currently connected network via the ISP identity.

It should be explained that the client terminal may acquire the network identity of the current network when detecting that a connecting status of the network changes, or may acquire the network identity of the current network every predetermined time interval. The present invention does not limit the timing at which the client terminal acquires the network identity.

In step 302, whether an information filtering rule corresponding to the network identity is stored is detected.

The information filtering rules for filtering code inserted by the carrier are pre-stored in the client terminal, wherein the information filtering rules are used for indicating a corresponding relationship between the network identities and the code inserted by the carriers, and the corresponding relationship may be as shown in the following Table 1.

**Table 1**

| Network Identities | Codes Inserted by Carriers |
|---|---|
| Communication carrier A | code A, code B, code C, code D |
| Communication carrier B | code E |
| Communication carrier C | Code F, code G |
| Communication carrier D | code H |

It should be explained that the code inserted by the carriers corresponding to different network identities may be the same, or may be different, or may be partially the same. In the present embodiment, only an example in which different network identities are corresponding to different code inserted by the carriers is explained, and the present invention is not limited thereto.

In normal conditions, different communication carriers insert different advertisements in the webpage, i.e., the information filtering rules with respect to different carriers are different, thus the client terminal needs to determine whether a corresponding information filtering rule is stored according to the acquired network identity. When detecting that the corresponding information filtering rule is stored, the advertisement inserted by the carrier may be filtered according to the information filtering rule, i.e., step 303 is performed; and when no corresponding information filtering rule is stored, step 304 is performed.

In step 303, if the information filtering rule is stored, code inserted by the carrier in webpage code is filtered according to the information filtering rule, wherein the webpage code is sent from a webpage server to a client terminal via a carrier server.

As shown in Fig. 1, the client terminal generates a corresponding HTTP request according to a website needs to be accessed, and sends the HTTP request to a carrier server, then the carrier server forwards the HTTP request to a corresponding webpage server. After receiving the HTTP request, the webpage server may return corresponding webpage code to the client terminal via the carrier server, wherein the webpage code is generally HTML code. The client terminal parses and displays the received HTML code so as to display the webpage. However, in normal conditions, the carrier server may insert a piece of advertisement code in the HTML code, and when receiving the HTML code, the client terminal may parse the advertisement code and display it on the webpage. Thereby, in order to filter the advertisement inserted by the carrier server, the client terminal needs to filter the advertisement code in the HTML code according to the stored information filtering rule.

For example, the client terminal acquires the network identity of the current network to be "Communication carrier A" and a corresponding filtering rule is stored, then the client terminal detects whether code A and code B exist in the webpage code returned by the carrier server according to the information filtering rule. If the code A or code B exists, it is determined that there is advertisement code inserted by the carrier, and the advertisement code is filtered. Since the advertisement code is filtered, the client terminal needs not to parse the advertisement code, and the advertisement inserted by the carrier will not appear on the webpage.

In step 304, if the information filtering rule is not stored, detecting whether carrier-inserted code is inserted by the carrier server by accessing a predetermined page of the webpage.

If the information filtering rule is not stored, the client terminal needs to further detect whether an action of inserting carrier-inserted code is performed by the carrier server. As one possible implementation manner, as shown in Fig. 3B, step 304 may include the following steps.

In step 304A, a predetermined page of the webpage is accessed.

The client terminal pre-stores therein original webpage code corresponding to the predetermined page of the webpage. When the client terminal accesses the predetermined page of the webpage, whether the carrier inserts the carrier-inserted code may be judged by comparing the original webpage code and the received webpage code. In order to save the computing resource of the client terminal when comparing the webpage code, the client terminal generally accesses a blank page.

In step 304B, a first webpage code sent by the carrier server is received.

The carrier server forwards the HTTP request sent by the client terminal to the corresponding webpage server, and the webpage server returns corresponding original webpage code according to the HTTP request. When the carrier server does not add the carrier-inserted code in the original webpage code, the first webpage code sent to the client terminal is the original webpage code; and when the carrier server adds the carrier-inserted code in the original webpage code, the first webpage code sent to the client terminal is the original webpage code after being inserted with the carrier-inserted code.

In step 304C, whether the first webpage code and a second webpage code are the same is detected, wherein the second webpage code is original webpage code corresponding to the predetermined page of the webpage.

The client terminal compares the received first webpage code and the original webpage code corresponding to the predetermined page of the webpage. When the first webpage code is the same as the original webpage code, it is determined that the carrier server does not insert the carrier-inserted code; and when the first webpage code is different from the original webpage code, it is determined that the carrier-inserted code is inserted by the carrier server.

In step 304D, when the first webpage code is different from the second webpage code, it is determined that the action of inserting the carrier-inserted code is performed by the carrier server.

For example, when the predetermined page of the webpage accessed by the client terminal is a blank page of the webpage, the original webpage code corresponding to the blank page of the webpage, i.e., the second webpage code does not include therein any link node or script, and when the received first webpage code includes therein link node or script, the client terminal may determine that the action of inserting the carrier-inserted code is performed by the carrier server.

In step 305, when the action of inserting the carrier-inserted code is performed by the carrier server, an information filtering rule is generated according to the network identity and the carrier-inserted code.

When the client terminal determines that the action of inserting the carrier-inserted code is performed by the carrier server, the carrier-inserted code is filtered and a corresponding information filtering rule is generated. When the client terminal continues to access the webpage via the network, since the client terminal had already stored therein the generated information filtering rule, the carrier-inserted code may be filtered directly according to the information filtering rule. As one possible implementation manner, as shown in Fig. 3C, step 305 may include the following steps.

In step 305A, difference code between the first and second webpage code is acquired.

For example, the predetermined page of the webpage accessed by the client terminal is a blank page, when the first webpage code sent by the carrier server includes therein a link node or script, the client terminal may determine the link node or script as the difference code.

In step 305B, the difference code is determined to be the carrier-inserted code.

In step 305C, an information filtering rule is generated according to a corresponding relationship between the network identity and the carrier-inserted code.

The client terminal generates an information filtering rule as shown in Table 1 according to the acquired network identity and the carrier-inserted code, and save the generated information filtering rule. At this time, the client terminal stores the information filtering rule with respect to the current network.

In step 306, the information filtering rule is reported to a server, wherein this server is used for aggregating the information filtering rules sent by individual client terminals, and generating update information with respect to the information filtering rules of individual communication carriers.

Since the carrier server may insert different carrier-inserted codes in different webpage codes, the information filtering rule generated by the client terminal may filter the advertisements inserted by some of the carriers. In order to improve the filtering efficiency of the client terminal, the client terminal may report the stored information filtering rules to the server every predetermined time interval. The predetermined time interval may be the same, or may be different. For instance, the client terminal may report the information filtering rules every 24 hours, or may report the information filtering rules on the first day of each month.

The server aggregates the information filtering rules reported by individual client terminals, and generates update information with respect to the information filtering rule of individual communication carrier.

For example, in the information filtering rules reported by the client terminal A, the carrier-inserted code corresponding to the communication carrier A are respectively "code A" and "code B"; and in the information filtering rules reported by the client terminal B, the carrier-inserted code corresponding to the communication carrier A are respectively "code B", "code C" and "code D", then the server may determine the carrier-inserted code corresponding to the communication carrier A includes "code A", "code B", "code C" and "code D", and generate the update information with respect to the information filtering rules of the communication carrier A, wherein the update information with respect to the client terminal A is "code C" and "code D", and the update information with respect to the client terminal B is "code A".

In step 307, the update information which is corresponding to the information filtering rule of the currently accessed network and is sent by the server is received, and the information filtering rule is updated according to the update information.

The server sends the update information of the corresponding information filtering rule to individual client terminal, accordingly, individual client terminal updates the stored information filtering rule according to the update information so as to achieve a better filtering effect.

In summary, in the method for filtering information provided by the present exemplary embodiment, the code inserted by the carrier in the webpage code is filtered by using the information filtering rule corresponding to the current network, which solves the problem of displaying the advertisement inserted by the carrier on the webpage and thus affecting the normal browsing of the user, and achieves the effects of filtering the advertisement inserted in the webpage by the carrier and ensuring the display of the webpage.

In the method for filtering information provided by the present exemplary embodiment, when no information filtering rule corresponding to the network identity is stored, whether the carrier-inserted code is inserted by the carrier server is detected by accessing a predetermined page of the webpage; and when detecting that the carrier-inserted code is inserted by the carrier server, an information filtering rule is generated according to the carrier-inserted code and the network identity, and the carrier-inserted code is filtered, such that the client terminal is capable of filtering the advertisement inserted by the carrier server in real time, and saving the generated filtering rules, which improve the efficiency of filtering the advertisements.

Moreover, in the method for filtering information provided by the present exemplary embodiment, the server aggregates the information filtering rules sent by respective client terminals and generates update information with respect to the information filtering rules of respective communication carriers, such that the information filtering rules stored in the client terminal may be supplemented and perfected, which further improves the efficiency of filtering the advertisements.

Embodiments of devices of the present invention are described hereinafter, which may be used for performing embodiments of methods of the present invention. For the details not described in the embodiments of devices of the present invention, please refer to the embodiments of methods of the present invention.

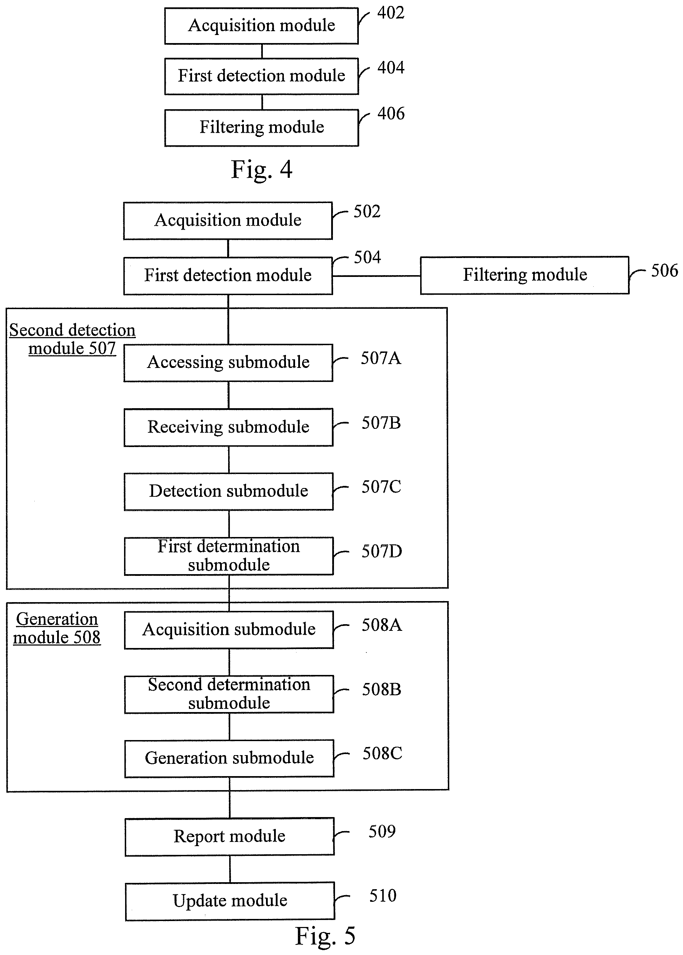

Fig. 4 illustrates a structural block diagram of a device for filtering information, according to an exemplary embodiment. The device for filtering information may be implemented to be a part or whole of the electronic apparatus 110 shown in Fig. 1 by software, hardware or a combination of them. The device for filtering information may include an acquisition module 402, a first detection module 404, and a filtering module 406.

The acquisition module 402 is configured to acquire a network identity of a currently accessed network, the network identity being an identity of a communication carrier providing the network.

The first detection module 404 is configured to detect whether an information filtering rule corresponding to the network identity is stored.

The filtering module 406 is configured to, if the information filtering rule is stored, filter carrier-inserted code in webpage code according to the information filtering rule, the webpage code being sent from a webpage server to a client terminal via a carrier server.

In summary, in the device for filtering information provided by the present exemplary embodiment, the code inserted by the carrier in the webpage code is filtered by using the information filtering rule corresponding to the current network, which solves the problem of displaying the advertisement inserted by the carrier on the webpage and thus affecting the normal browsing of the user, and achieves the effects of filtering the advertisement inserted in the webpage by the carrier and ensuring the display of contents of the webpage.

Fig. 5 illustrates a structural block diagram of a device for filtering information, according to another exemplary embodiment. The device for filtering information may be implemented to be a part or whole of the electronic apparatus 110 shown in Fig. 1 by software, hardware or a combination of them. The device for filtering information may include an acquisition module 502, a first detection module 504, and a filtering module 506.

The acquisition module 502 is configured to acquire a network identity of a currently accessed network, the network identity being an identity of a communication carrier providing the network.

The first detection module 504 is configured to detect whether an information filtering rule corresponding to the network identity is stored.

The filtering module 506 is configured to, if the information filtering rule is stored, filter carrier-inserted code in webpage code according to the information filtering rule, the webpage code being sent from a webpage server to a client terminal via a carrier server.

Optionally, the device further includes a second detection module 507 and a generation module 508.

The second detection module 507 is configured to, if the information filtering rule is not stored, detect whether an action of inserting the carrier-inserted code is performed by the carrier server through accessing a predetermined page of the webpage.

The generation module 508 is configured to, if the action of inserting the carrier-inserted code is performed by the carrier server, generate an information filtering rule according to the network identity and the carrier-inserted code.

Optionally, the second detection module 507 includes an accessing submodule 507A, a receiving submodule 507B, a detection submodule 507C and a first determination submodule 507D.

The accessing submodule 507A is configured to access a predetermined page of the webpage.

The receiving submodule 507B is configured to receive a first webpage code sent by the carrier server.

The detection submodule 507C is configured to detect whether the first webpage code is the same as a second webpage code, the second webpage code being original webpage code corresponding to the predetermined page of the webpage.

The first determination submodule 507D is configured to, if the first webpage code is different from the second webpage code, determine that the action of inserting the carrier-inserted code is performed by the carrier server.

Optionally, the generation module 508 includes an acquisition submodule 508A, a second determination submodule 508B and a generation submodule 508C.

The acquisition submodule 508A is configured to acquire difference code between the first and second webpage code.

The second determination submodule 508B is configured to determine the difference code as the carrier-inserted code.

The generation submodule 508C is configured to generate the information filtering rule according to a corresponding relationship between the network identity and the carrier-inserted code.

Optionally, the device further includes a report module 509 and an update module 510.

The report module 509 is configured to report the information filtering rule to a server, the server being configured for aggregating the information filtering rules sent by respective client terminals and generating update information with respect to the information filtering rules of respective communication carriers.

The update module 510 is configured to receive the update information which is corresponding to the information filtering rule of the currently accessed network and is sent by the server, and update the information filtering rule according to the update information.
In summary, in the device for filtering information provided by the present exemplary embodiment, the code inserted by the carrier in the webpage code is filtered by using the information filtering rule corresponding to the current network, which solves the problem of displaying the advertisement inserted by the carrier on the webpage and thus affecting the normal browsing of the user, and achieves the effects of filtering the advertisement inserted in the webpage by the carrier and ensuring the display of the webpage.

In the device for filtering information provided by the present exemplary embodiment, when no information filtering rule corresponding to the network identity is stored, whether the carrier-inserted code is inserted by the carrier server is detected by accessing a predetermined page of the webpage; and when detecting that the carrier-inserted code is inserted by the carrier server, an information filtering rule is generated according to the carrier-inserted code and the network identity, and the carrier-inserted code is filtered, such that the client terminal is capable of filtering the advertisements inserted by the carrier server in real time, and saving the generated filtering rules, which improve the efficiency of filtering the advertisements.

Moreover, in the device for filtering information provided by the present exemplary embodiment, the server aggregates the information filtering rules sent by respective client terminals and generates update information with respect to the information filtering rules of respective communication carriers, such that the information filtering rules stored in the client terminal may be supplemented and perfected, which further improves the efficiency of filtering the advertisements.

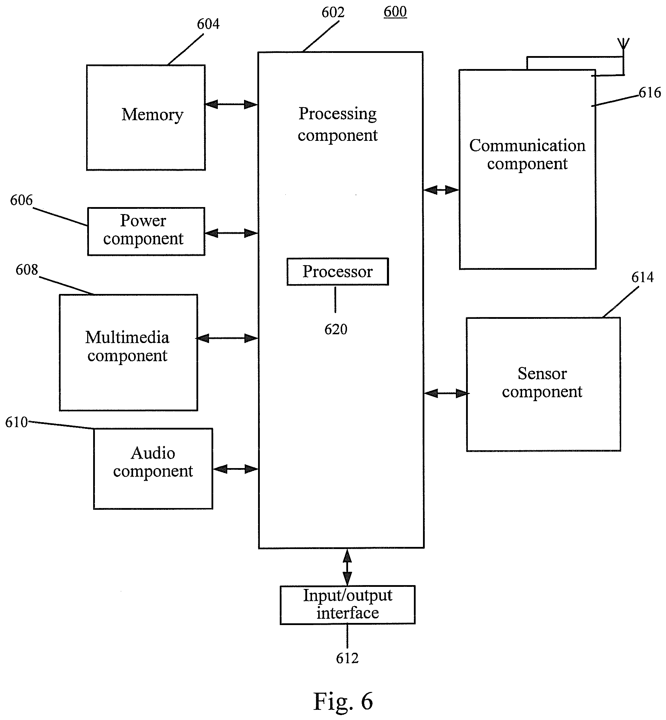

Fig. 6 is a block diagram of a device 600 for filtering information, according to an exemplary embodiment. For example, the device 600 may be the electronic device 110 shown in Fig. 1, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.
The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided. When the instructions in the storage medium is performed by the processor of the device 600, the device 600 can perform the method for filtering information applied in the electronic device 110 shown in Fig. 1.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for filtering information whereby the method comprises:
• acquiring (202, 301) a network identity of a currently accessed network, the network identity being an identity of a communication carrier providing the network;
• detecting (204, 302) whether an information filtering rule corresponding to the network identity is stored; and
• if the information filtering rule is stored, filtering (206, 303) carrier-inserted code in webpage code according to the information filtering rule, the webpage code being sent from a webpage server to a client terminal via a carrier server,
said method further comprising:
• if the information filtering rule is not stored, detecting (304) whether an action of inserting the carrier-inserted code is performed by the carrier server through accessing a predetermined page of the webpage; and
• if the action of inserting the carrier-inserted code is performed by the carrier server, generating (305) an information filtering rule according to the network identity and the carrier-inserted code.

2. The method according to claim 1, wherein detecting (304) whether the action of inserting the carrier-inserted code is performed by the carrier server through accessing the predetermined page of the webpage comprises:
• accessing (304A) the predetermined page of the webpage;
• receiving (304B) a first webpage code sent by the carrier server;
• detecting (304C) whether the first webpage code is the same as a second webpage code, the second webpage code being original webpage code corresponding to the predetermined page of the webpage; and
• if the first webpage code is different from the second webpage code, determining (304D) that the action of inserting the carrier-inserted code is performed by the carrier server.

3. The method according to claim 2, wherein generating (305) the information filtering rule according to the network identity and the carrier-inserted code comprises:
• acquiring (305A) difference code between the first and second webpage codes;
• determining (305B) the difference code as the carrier-inserted code; and
• generating (305C) an information filtering rule according to a corresponding relationship between the network identity and the carrier-inserted code.

4. The method according to any one of claims 1-3, further comprising:
• reporting (306) the information filtering rule to a server, the server being configured for aggregating the information filtering rules sent by respective client terminals and generating update information with respect to the information filtering rules of respective communication carriers; and
• receiving (307) the update information which is corresponding to the information filtering rule of the currently accessed network and is sent by the server, and updating the information filtering rule according to the update information.

5. A device for filtering information, whereby the device comprises:
• an acquisition module (402, 502) configured to acquire a network identity of a currently accessed network, the network identity being an identity of a communication carrier providing the network;
• a first detection module (404, 504) configured to detect whether an information filtering rule corresponding to the network identity is stored; and
• a filtering module (406, 506) configured to, if the information filtering rule is stored, filtering carrier-inserted code in webpage code according to the information filtering rule, the webpage code being sent from a webpage server to a client terminal via a carrier server,
said device further comprising:
• a second detection module (507) configured to, if the information filtering rule is not stored, detect whether an action of inserting the carrier-inserted code is performed by the carrier server through accessing a predetermined page of the webpage; and
• a generation module (508) configured to, if the action of inserting the carrier-inserted code is performed by the carrier server, generate the information filtering rule according to the network identity and the carrier-inserted code.

6. The device according to claim 5, wherein the second detection module (507) comprises:
• an accessing submodule (507A) configured to access the predetermined page of the webpage;
• a receiving submodule (507B) configured to receive a first webpage code sent by the carrier server;
• a detection submodule (507C) configured to detect whether the first webpage code is the same as a second webpage code, the second webpage code being original webpage code corresponding to the predetermined page of the webpage; and
• a first determination submodule (507D) configured to, if the first webpage code is different from the second webpage code, determine that the action of inserting the carrier-inserted code is performed by the carrier server.

7. The device according to claim 6, wherein the generation module (508) comprises:
• an acquisition submodule (508A) configured to acquire difference code between the first and second webpage codes;
• a second determination submodule (508B) configured to determine the difference code as the carrier-inserted code; and
• a generation submodule (508C) configured to generate the information filtering rule according to a corresponding relationship between the network identity and the carrier-inserted code.

8. The device according to any one of claims 5-7, further comprising:
• a report module (509) configured to report the information filtering rule to a server, the server being configured for aggregating the information filtering rules sent by respective client terminals and generating update information with respect to the information filtering rules of respective communication carriers; and
• an update module (510) configured to receive the update information which is corresponding to the information filtering rule of the currently accessed network and is sent by the server, and update the information filtering rule according to the update information.

9. A computer program, which when executed on a processor of an electronic device, performs a method according to any one of claims 1 to 4.

## Patentansprüche

1. Verfahren zum Filtern von Informationen, wobei das Verfahren umfasst:
• Erfassen (202, 301) einer Netzwerkidentität eines Netzwerks, auf das aktuell zugegriffen wird, wobei die Netzwerkidentität eine Identität eines Kommunikationsträgers ist, der das Netzwerk bereitstellt,
• Ermitteln (204, 302), ob eine Informationsfilterregel, die der Netzwerkidentität entspricht, gespeichert ist, und
• wenn die Informationsfilterregel gespeichert ist, Filtern (206, 303) eines von dem Träger eingeführten Codes in Webseitencode gemäß der Informationsfilterregel, wobei der Webseitencode von einem Webseitenserver über einen Trägerserver zu einem Client-Endgerät gesendet wird,
wobei das Verfahren ferner umfasst:
• wenn die Informationsfilterregel nicht gespeichert ist, Ermitteln (304), ob eine Handlung des Einführens des von dem Träger eingeführten Codes von dem Trägerserver durch Zugreifen auf eine vorbestimmte Seite der Webseite durchgeführt wird, und
• wenn die Handlung des Einführens des von dem Träger eingeführten Codes von dem Trägerserver durchgeführt wird, Erzeugen (305) einer Informationsfilterregel gemäß der Netzwerkidentität und dem von dem Träger eingeführten Code.

2. Verfahren nach Anspruch 1, wobei das Ermitteln (304), ob die Handlung des Einführens des von dem Träger eingeführten Codes von dem Trägerserver durch Zugreifen auf die vorbestimmte Seite der Webseite durchgeführt wird, umfasst:
• Zugreifen (304A) auf die vorbestimmte Seite der Webseite,
• Empfangen (304B) eines ersten Webseitencodes, der von dem Trägerserver gesendet wird,
• Ermitteln (304C), ob der erste Webseitencode derselbe wie ein zweiter Webseitencode ist, wobei der zweite Webseitencode ursprünglicher Webseitencode ist, der der vorbestimmten Seite der Webseite entspricht, und
• wenn sich der erste Webseitencode von dem zweiten Webseitencode unterscheidet, Bestimmen (304D), dass die Handlung des Einführens des von dem Träger eingeführten Codes von dem Trägerserver durchgeführt wird.

3. Verfahren nach Anspruch 2, wobei das Erzeugen (305) der Informationsfilterregel gemäß der Netzwerkidentität und dem von dem Träger eingeführten Code umfasst:
• Erfassen (305A) eines Differenzcodes zwischen dem ersten und dem zweiten Webseitencode,
• Bestimmen (305B) des Differenzcodes als den von dem Träger eingeführten Code, und
• Erzeugen (305C) einer Informationsfilterregel gemäß einem entsprechenden Verhältnis zwischen der Netzwerkidentität und dem von dem Träger eingeführten Code.

4. Verfahren nach einem der Ansprüche 1-3, ferner umfassend:
• Mitteilen (306) der Informationsfilterregel an einen Server, wobei der Server zum Sammeln der Informationsfilterregeln, die von jeweiligen Client-Endgeräten gesendet werden, und Erzeugen von Aktualisierungsinformationen bezüglich der Informationsfilterregeln jeweiliger Kommunikationsträger konfiguriert ist, und
• Empfangen (307) der Aktualisierungsinformationen, welche der Informationsfilterregel des Netzwerks, auf das aktuell zugegriffen wird, entsprechen, und von dem Server gesendet werden, und Aktualisieren der Informationsfilterregel gemäß den Aktualisierungsinformationen.

5. Vorrichtung zum Filtern von Informationen, wobei die Vorrichtung umfasst:
• ein Erfassungsmodul (402, 502), das konfiguriert ist, um eine Netzwerkidentität eines Netzwerks, auf das aktuell zugegriffen wird, zu erfassen, wobei die Netzwerkidentität eine Identität eines Kommunikationsträgers ist, der das Netzwerk bereitstellt,
• ein erstes Ermittlungsmodul (404, 504), das konfiguriert ist, um zu ermitteln, ob eine Informationsfilterregel, die der Netzwerkidentität entspricht, gespeichert ist, und
• ein Filtermodul (406, 506), das konfiguriert ist, um, wenn die Informationsfilterregel gespeichert ist, den von dem Träger eingeführten Code in Webseitencode gemäß der Informationsfilterregel zu filtern, wobei der Webseitencode von einem Webseitenserver über einen Trägerserver zu einem Client-Endgerät gesendet wird,
die Vorrichtung ferner umfassend:
• ein zweites Ermittlungsmodul (507), das konfiguriert ist, um, wenn die Informationsfilterregel nicht gespeichert ist, zu ermitteln, ob eine Handlung des Einführens des von dem Träger eingeführten Codes von dem Trägerserver durch Zugreifen auf eine vorbestimmte Seite der Webseite durchgeführt wird, und
• ein Erzeugungsmodul (508), das konfiguriert ist, um, wenn die Handlung des Einführens des von dem Träger eingeführten Codes von dem Trägerserver durchgeführt wird, die Informationsfilterregel gemäß der Netzwerkidentität und dem von dem Träger eingeführten Codes zu erzeugen.

6. Vorrichtung nach Anspruch 5, wobei das zweite Ermittlungsmodul (507) umfasst:
• ein Zugriffsteilmodul (507A), das konfiguriert ist, um auf die vorbestimmte Seite der Webseite zuzugreifen,
• ein Empfangsteilmodul (507B), das konfiguriert ist, um einen ersten Webseitencode zu empfangen, der von dem Trägerserver gesendet wird,
• ein Ermittlungsteilmodul (507C), das konfiguriert ist, um zu ermitteln, ob der erste Webseitencode derselbe wie ein zweiter Webseitencode ist, wobei der zweite Webseitencode ursprünglicher Webseitencode ist, der der vorbestimmten Seite der Webseite entspricht, und
• ein erstes Bestimmungsteilmodul (507D), das konfiguriert ist, um, wenn sich der erste Webseitencode von dem zweiten Webseitencode unterscheidet, zu bestimmen, dass die Handlung des Einführens des von dem Träger eingeführten Codes von dem Trägerserver durchgeführt wird.

7. Vorrichtung nach Anspruch 6, wobei das Erzeugungsmodul (508) umfasst:
• ein Erfassungsteilmodul (508A), das konfiguriert ist, um einen Differenzcode zwischen dem ersten und dem zweiten Webseitencode zu erfassen,
• ein zweites Bestimmungsteilmodul (508B), das konfiguriert ist, um den Differenzcode als den von dem Träger eingeführten Code zu bestimmen, und
• ein Erzeugungsteilmodul (508C), das konfiguriert ist, um die Informationsfilterregel gemäß einem entsprechenden Verhältnis zwischen der Netzwerkidentität und dem von dem Träger eingeführten Code zu erzeugen.

8. Vorrichtung nach einem der Ansprüche 5-7, ferner umfassend:
• ein Mitteilungsmodul (509), das konfiguriert ist, um die Informationsfilterregel einem Server mitzuteilen, wobei der Server zum Sammeln der Informationsfilterregeln, die von jeweiligen Client-Endgeräten gesendet werden, und Erzeugen von Aktualisierungsinformationen bezüglich der Informationsfilterregeln jeweiliger Kommunikationsträger konfiguriert ist, und
• ein Aktualisierungsmodul (510), das konfiguriert ist, um die Aktualisierungsinformationen zu empfangen, welche der Informationsfilterregel des Netzwerks, auf das aktuell zugegriffen wird, entsprechen und die von dem Server gesendet werden, und die Informationsfilterregel gemäß den Aktualisierungsinformationen zu aktualisieren.

9. Computerprogramm, welches, wenn es auf einem Prozessor einer elektronischen Vorrichtung ausgeführt wird, ein Verfahren nach einem der Ansprüche 1 bis 4 durchführt.

## Revendications

1. Procédé de filtrage d'informations, moyennant quoi le procédé comprend les étapes ci-dessous consistant à :
• acquérir (202, 301) une identité de réseau d'un réseau en cours d'accès, l'identité de réseau étant une identité d'une porteuse de communication fournissant le réseau ;
• détecter (204, 302) si une règle de filtrage d'informations correspondant à l'identité de réseau est stockée ; et
• si la règle de filtrage d'informations est stockée, filtrer (206, 303) un code inséré par porteuse dans un code de page web selon la règle de filtrage d'informations, le code de page web étant envoyé d'un serveur de page web à un terminal client, par l'intermédiaire d'un serveur de porteuse,
ledit procédé comprenant en outre les étapes ci-dessous consistant à :
• si la règle de filtrage d'informations n'est pas stockée, détecter (304) si une action d'insertion du code inséré par porteuse est mise en œuvre par le serveur de porteuse à travers l'accès à une page prédéterminée de la page web ; et
• si l'action d'insertion du code inséré par porteuse est mise en œuvre par le serveur de porteuse, générer (305) une règle de filtrage d'informations selon l'identité de réseau et le code inséré par porteuse.

2. Procédé selon la revendication 1, dans lequel l'étape consistant à détecter (304) si l'action d'insertion du code inséré par porteuse est mise en œuvre par le serveur de porteuse à travers l'accès à la page prédéterminée de la page web comprend les étapes ci-dessous consistant à :
• accéder (304A) à la page prédéterminée de la page web ;
• recevoir (304B) un premier code de page web envoyé par le serveur de porteuse ;
• détecter (304C) si le premier code de page web est le même qu'un second code de page web, le second code de page web étant un code de page web d'origine correspondant à la page prédéterminée de la page web ; et
• si le premier code de page web est différent du second code de page web, déterminer (304D) que l'action d'insertion du code inséré par porteuse est mise en œuvre par le serveur de porteuse.

3. Procédé selon la revendication 2, dans lequel l'étape de génération (305) de la règle de filtrage d'informations selon l'identité de réseau et le code inséré par porteuse comprend les étapes ci-dessous consistant à :
• acquérir (305A) un code de différence entre les premier et second codes de page web ;
• déterminer (305B) le code de différence en tant que le code inséré par porteuse ; et
• générer (305C) une règle de filtrage d'informations selon une relation correspondante entre l'identité de réseau et le code inséré par porteuse.

4. Procédé selon l'une quelconque des revendications 1 à 3, comprenant en outre les étapes ci-dessous consistant à :
• signaler (306) la règle de filtrage d'informations à un serveur, le serveur étant configuré de manière à agréger les règles de filtrage d'informations envoyées par des terminaux clients respectifs, et générer des informations de mise à jour relativement aux règles de filtrage d'informations de porteuses de communication respectives ; et
• recevoir (307) les informations de mise à jour qui correspondent à la règle de filtrage d'informations du réseau en cours d'accès et qui sont envoyées par le serveur, et mettre à jour la règle de filtrage d'informations selon les informations de mise à jour.

5. Dispositif destiné à filtrer des informations, le dispositif comprenant :
• un module d'acquisition (402, 502) configuré de manière à acquérir une identité de réseau d'un réseau en cours d'accès, l'identité de réseau étant une identité d'une porteuse de communication fournissant le réseau ;
• un premier module de détection (404, 504) configuré de manière à détecter si une règle de filtrage d'informations correspondant à l'identité de réseau est stockée ; et
• un module de filtrage (406, 506) configuré de manière à, si la règle de filtrage d'informations est stockée, filtrer un code inséré par porteuse dans un code de page web selon la règle de filtrage d'informations, le code de page web étant envoyé d'un serveur de page web à un terminal client, par l'intermédiaire d'un serveur de porteuse ;
ledit dispositif comprenant en outre :
• un second module de détection (507) configuré de manière à, si la règle de filtrage d'informations n'est pas stockée, détecter si une action d'insertion du code inséré par porteuse est mise en œuvre par le serveur de porteuse à travers l'accès à une page prédéterminée de la page web ; et
• un module de génération (508) configuré de manière à, si l'action d'insertion du code inséré par porteuse est mise en œuvre par le serveur de porteuse, générer une règle de filtrage d'informations selon l'identité de réseau et le code inséré par porteuse.

6. Dispositif selon la revendication 5, dans lequel le second module de détection (507) comprend :
• un sous-module d'accès (507A) configuré de manière à accéder à la page prédéterminée de la page web ;
• un sous-module de réception (507B) configuré de manière à recevoir un premier code de page web envoyé par le serveur de porteuse ;
• un sous-module de détection (507C) configuré de manière à détecter si le premier code de page web est le même qu'un second code de page web, le second code de page web étant un code de page web d'origine correspondant à la page prédéterminée de la page web ; et
• un premier sous-module de détermination (507D) configuré de manière à, si le premier code de page web est différent du second code de page web, déterminer que l'action d'insertion du code inséré par porteuse est mise en œuvre par le serveur de porteuse.

7. Dispositif selon la revendication 6, dans lequel le module de génération (508) comprend :
• un sous-module d'acquisition (508A) configuré de manière à acquérir un code de différence entre les premier et second codes de page web ;
• un second sous-module de détermination (508B) configuré de manière à déterminer le code de différence en tant que le code inséré par porteuse ; et
• un sous-module de génération (508C) configuré de manière à générer la règle de filtrage d'informations selon une relation correspondante entre l'identité de réseau et le code inséré par porteuse.

8. Dispositif selon l'une quelconque des revendications 5 à 7, comprenant en outre :
• un module de signalement (509) configuré de manière à signaler la règle de filtrage d'informations à un serveur, le serveur étant configuré de manière à agréger les règles de filtrage d'informations envoyées par des terminaux clients respectifs, et à générer des informations de mise à jour relativement aux règles de filtrage d'informations de porteuses de communication respectives ; et
• un module de mise à jour (510) configuré de manière à recevoir les informations de mise à jour qui correspondent à la règle de filtrage d'informations du réseau en cours d'accès et qui sont envoyées par le serveur, et à mettre à jour la règle de filtrage d'informations selon les informations de mise à jour.

9. Programme informatique qui, lorsqu'il est exécuté sur un processeur d'un dispositif électronique, met en œuvre un procédé selon l'une quelconque des revendications 1 à 4.
